# EUROPEAN PATENT APPLICATION

(11) **EP 4 521 511 A1**
(43) Date of publication of application: **12.03.2025**
(21) Application number: 24198997.9
(22) Date of filing: 06.09.2024
(51) Int. Cl.: H01M 10/42, H01M 4/505, H01M 4/525, H01M 4/58, H01M 10/0525, H01M 4/62

(54) **LITHIUM-ION BATTERY CATHODE MATERIAL**

(30) Priority: 07.09.2023 CN 202311155564
(71) Applicant: Techtronic Cordless GP, Anderson, SC 29621 (US)
(72) Inventor: LI, Jun, Anderson, 29621 (US)
(74) Representative: Parker, Andrew James

(57) **Abstract**

The present invention provides a lithium-ion battery positive electrode material, containing lithium carbonate and lithium hydroxide, the molar ratio of the lithium carbonate to the lithium hydroxide being 4: 1 - 14 : 1, preferably 5 : 1 - 12: 1, and more preferably 8 : 1; the content of the lithium carbonate and lithium hydroxide is 0.1 wt% - 10 wt%, preferably 1 wt% - 7 wt%, and more preferably 4 wt%. In the present invention, by adding lithium carbonate and lithium hydroxide, and controlling the total amount of lithium carbonate and lithium hydroxide in the positive electrode material as well as the proportions of lithium carbonate and lithium hydroxide, rapid activation of a CID during overcharging of a battery is made possible, thus improving safety performance and avoiding abnormal activation of the CID before overcharging occurs.

## Description

### Technical field

The present invention relates to the technical field of lithium-ion batteries, and in particular to a lithium-ion battery positive electrode material.

### Background art

A lithium-ion battery contains five main parts, namely a casing, a positive electrode, a negative electrode, a separator and electrolyte. The material of the positive electrode of the lithium-ion battery is a key factor in determining the battery's electrochemical performance, safety performance, energy density and cost. At present, there are many types of lithium-ion battery positive electrode material, e.g. cobalt-based positive electrode materials, nickel-based positive electrode materials, manganese-based positive electrode materials and lithium iron phosphate positive electrode material, etc.

Overcharging of a lithium-ion battery will not only cause irreversible damage to the battery assembly, but might also cause serious safety issues such as explosion or combustion. To deal with this, batteries are usually equipped with a current interrupt device (CID). A CID is a protective element that ensures safety during charging; when the pressure inside the battery rises to a given level, the CID activates to interrupt the current, thus safely preventing battery overcharging.

During battery overcharging, the high voltage causes the electrolyte to oxidize and decompose, producing hydrofluoric acid which reacts with lithium carbonate to produce carbon dioxide gas, thus increasing the pressure inside the battery; when the pressure rises to a given level, the CID activates. If the content of lithium carbonate in the lithium-ion battery positive electrode material is too high, it will react with acidic substances in the electrolyte before overcharging occurs, producing enough gas to cause abnormal activation of the CID, resulting in a battery open circuit; the battery and the entire battery pack are scrapped, so the user is unable to use them normally. In view of this, there is a need to provide a lithium-ion battery positive electrode material, to at least partially solve the abovementioned problem.

### Summary of the invention

An objective of the present invention is to provide a lithium-ion battery positive electrode material. By adding lithium carbonate and lithium hydroxide, and controlling the total amount of lithium carbonate and lithium hydroxide in the positive electrode material as well as the proportions of lithium carbonate and lithium hydroxide, rapid activation of a CID during overcharging of a battery is made possible, thus improving safety performance and avoiding abnormal activation of the CID before overcharging occurs.

One aspect of the present invention provides a lithium-ion battery positive electrode material, containing lithium carbonate and lithium hydroxide, the molar ratio of the lithium carbonate to the lithium hydroxide being 4 : 1 - 14 : 1, preferably 5 : 1 - 12 : 1, and more preferably 8 : 1.

In an embodiment, the content of the lithium carbonate and lithium hydroxide is 0.1 wt% - 10 wt%, preferably 1 wt% - 7 wt%, and more preferably 4 wt%.

In an embodiment, the lithium-ion battery positive electrode material contains 90 wt% - 99 wt%, preferably 93 wt%, of a positive electrode active material.

In an embodiment, the positive electrode active material is selected from at least one of lithium nickel cobalt manganese oxide, lithium manganese oxide, lithium cobalt oxide, lithium nickel oxide, lithium nickel cobalt aluminum oxide and lithium iron phosphate.

In an embodiment, the positive electrode active material is LiNi_{0.8}Co_{0.1}Mn_{0.1}O₂.

In an embodiment, the lithium-ion battery positive electrode material further contains 0.1 wt% - 10 wt% of a binder.

In an embodiment, the binder is selected from at least one of polyvinylidene fluoride, carboxymethyl cellulose and styrene-butadiene rubber.

In an embodiment, the lithium-ion battery positive electrode material further contains 0.1 wt% - 10 wt%, preferably 2 wt%, of a conductive agent.

In an embodiment, the conductive agent is selected from at least one of conductive carbon black, superconductive carbon black, carbon nanotubes, vapor-grown carbon fibers and graphite conductive agents.

Another aspect of the present invention provides a lithium-ion battery, comprising:
a positive electrode, containing a positive electrode current collector and the lithium-ion battery positive electrode material described above;
a negative electrode, containing a negative electrode current collector and a negative electrode material;
a separator; and
an electrolyte.

Another aspect of the present invention provides a method for preparing the lithium-ion battery positive electrode material described above, the method comprising the following steps:
step 1, obtaining the content of lithium carbonate and lithium hydroxide in a positive electrode active material;
step 2, adding lithium carbonate and/or lithium hydroxide according to the content from step 1.

In an embodiment, lithium carbonate and/or lithium hydroxide is/are added so that the molar ratio of lithium carbonate to lithium hydroxide in the positive electrode material is 4 : 1 - 14 : 1, preferably 5 : 1 - 12 : 1, and more preferably 8 : 1.

In an embodiment, lithium carbonate and/or lithium hydroxide is/are added so that the content of lithium carbonate and lithium hydroxide in the positive electrode material is 0.1 wt% - 10 wt%, preferably 1 wt% - 7 wt%, and more preferably 4 wt%.

### Brief description of the drawings

Fig. 1 shows the results of overcharge testing of positive electrode plates in three groups A, C and E.
Fig. 2 shows the results of hot box testing of positive electrode plates in three groups A, C and E.

### Detailed description of the invention

Particular embodiments of the present invention are now described in detail with reference to the drawings. Only preferred embodiments of the present invention are described here; those skilled in the art could conceive of other ways of realizing the present invention on the basis of these preferred embodiments, said other ways likewise falling within the scope of the present invention. In some embodiments, to avoid confusion with the present invention, certain technical features which are well known in the art are not described.

### Definitions

Unless otherwise defined, all technical and scientific terms used in the present invention have the same meanings as commonly understood by those skilled in the art. In case of conflict, the present invention (including definitions) shall prevail. Only exemplary methods and materials are described below; methods and materials similar or equivalent to those described in the present invention may all be used in experiments or tests of the present invention. The materials, methods and examples disclosed in the present invention are merely illustrative, and not intended to be limiting.

The statement of a numerical range in the present invention explicitly allows for every intermediate number with the same precision within said range. For example, for the range 6-9, the numbers 7 and 8 are considered in addition to 6 and 9; and for the range 6.0 - 7.0, the numbers 6.0, 6.1, 6.2, 6.3, 6.4, 6.5, 6.6, 6.7, 6.8, 6.9 and 7.0 are explicitly allowed for.

### Lithium-ion battery

An exemplary lithium-ion battery contains a casing, and the following accommodated within the casing: a positive electrode, a negative electrode, a separator and an electrolyte.

### I. Positive electrode

An exemplary positive electrode generally may contain a positive electrode material and a positive electrode current collector. An exemplary positive electrode material may contain a positive electrode active material, a binder, a conductive agent and an additive. The positive electrode material is formed on a surface of the positive electrode current collector. The positive electrode material may be formed on only one side of the positive electrode current collector, or on front and back sides of the positive electrode current collector. The positive electrode material may for example have a thickness of 10 µm to 200 µm. An exemplary positive electrode current collector is aluminum foil.

There are no particular restrictions on the positive electrode active material; an exemplary positive electrode active material is selected from at least one of lithium nickel cobalt manganese oxide, lithium manganese oxide, lithium cobalt oxide, lithium nickel oxide, lithium nickel cobalt aluminum oxide and lithium iron phosphate. Preferably, the positive electrode active material is LiNi_{0.8}Co_{0.1}Mn_{0.1}O₂.

An exemplary positive electrode material may contain 90 wt% - 99 wt% of positive electrode active material. In various cases, an exemplary positive electrode material may contain 91 wt% - 99 wt% of positive electrode active material; 92 wt% - 98 wt% of positive electrode active material; 93 wt% - 97 wt% of positive electrode active material; or 94 wt% - 96 wt% of positive electrode active material. In various cases, an exemplary positive electrode material may contain not more than 99 wt% of positive electrode active material; not more than 98 wt% of positive electrode active material; not more than 97 wt% of positive electrode active material; not more than 96 wt% of positive electrode active material; not more than 95 wt% of positive electrode active material; not more than 94 wt% of positive electrode active material; not more than 93 wt% of positive electrode active material; not more than 92 wt% of positive electrode active material; not more than 91 wt% of positive electrode active material; or not more than 90 wt% of positive electrode active material. In various cases, an exemplary positive electrode material may contain not less than 90 wt% of positive electrode active material; not less than 91 wt% of positive electrode active material; not less than 92 wt% of positive electrode active material; not less than 93 wt% of positive electrode active material; not less than 94 wt% of positive electrode active material; not less than 95 wt% of positive electrode active material; not less than 96 wt% of positive electrode active material; not less than 97 wt% of positive electrode active material; not less than 98 wt% of positive electrode active material; or not less than 99 wt% of positive electrode active material. An exemplary positive electrode material may also be substantially formed of positive electrode active material alone.

An exemplary binder is selected from at least one of polyvinylidene fluoride (PVDF), carboxymethyl cellulose, styrene-butadiene rubber, polybenzimidazole, polyimide, polyvinyl acetate, polyacrylonitrile, polyvinyl alcohol, starch, hydroxypropylmethylcellulose, regenerated cellulose, polyvinylpyrrolidone, polyethylene, polypropylene, polystyrene, poly(methyl methacrylate), polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylenesulfone, polyacetal, polyphenylene ether, polybutylene terephthalate, ethylene-propylene-diene terpolymer, sulfonated ethylene-propylene-diene terpolymer, fluorocarbon rubber and various copolymers. Preferably, it is selected from at least one of PVDF, carboxymethyl cellulose and styrene-butadiene rubber. As a preferred, non-limiting example, the binder is PVDF.

An exemplary positive electrode material may contain 0.1 wt% - 10 wt% of binder. In various cases, an exemplary positive electrode material may contain 0.5 wt% - 9.5 wt% of binder; 1 wt% - 9 wt% of binder; 3 wt% - 7 wt% of binder; or 4 wt% - 6 wt% of binder. In various cases, an exemplary positive electrode material may contain not more than 10 wt% of binder; not more than 9 wt% of binder; not more than 7 wt% of binder; not more than 6 wt% of binder; not more than 5 wt% of binder; not more than 4 wt% of binder; not more than 3 wt% of binder; not more than 2 wt% of binder; not more than 1 wt% of binder; or not more than 0.5 wt% of binder. In various cases, an exemplary positive electrode material may contain not less than 0.1 wt% of binder; not less than 0.5 wt% of binder; not less than 1 wt% of binder; not less than 2 wt% of binder; not less than 3 wt% of binder; not less than 4 wt% of binder; not less than 5 wt% of binder; not less than 6 wt% of binder; not less than 7 wt% of binder; not less than 8 wt% of binder; or not less than 9 wt% of binder.

An exemplary conductive agent is selected from at least one of conductive carbon black, superconductive carbon black, carbon nanotubes, vapor-grown carbon fibers and graphite conductive agents. Preferably, the conductive agent is selected from conductive carbon black or superconductive carbon black. More preferably, the conductive agent is superconductive carbon black.

An exemplary positive electrode material may contain 0.1 wt% - 10 wt% of conductive agent. In various cases, an exemplary positive electrode material may contain 0.5 wt% - 9.5 wt% of conductive agent; 1 wt% - 9 wt% of conductive agent; 3 wt% - 7 wt% of conductive agent; or 4 wt% - 6 wt% of conductive agent. In various cases, an exemplary positive electrode material may contain not more than 10 wt% of conductive agent; not more than 9 wt% of conductive agent; not more than 7 wt% of conductive agent; not more than 6 wt% of conductive agent; not more than 5 wt% of conductive agent; not more than 4 wt% of conductive agent; not more than 3 wt% of conductive agent; not more than 2 wt% of conductive agent; not more than 1 wt% of conductive agent; or not more than 0.5 wt% of conductive agent. In various cases, an exemplary positive electrode material may contain not less than 0.1 wt% of conductive agent; not less than 0.5 wt% of conductive agent; not less than 1 wt% of conductive agent; not less than 2 wt% of conductive agent; not less than 3 wt% of conductive agent; not less than 4 wt% of conductive agent; not less than 5 wt% of conductive agent; not less than 6 wt% of conductive agent; not less than 7 wt% of conductive agent; not less than 8 wt% of conductive agent; or not less than 9 wt% of conductive agent.

An exemplary additive comprises lithium carbonate (Li₂CO₃) and/or lithium hydroxide (LiOH). It should be explained that the positive electrode active material may contain a certain amount of lithium carbonate and lithium hydroxide. For this reason, it is necessary to first obtain the respective contents of lithium carbonate and lithium hydroxide in the positive electrode active material by analysis (e.g. by potentiometric titration, calculation, etc.), and then calculate the respective addition amounts of lithium carbonate and/or lithium hydroxide in the additive, so as to ensure that the total amount of lithium carbonate and lithium hydroxide in the positive electrode material, and the proportions of lithium carbonate and lithium hydroxide, are within a certain range.

An exemplary positive electrode material may contain 0.1 wt% - 10 wt% of lithium carbonate and lithium hydroxide. In various cases, an exemplary positive electrode material may contain 0.5 wt% - 9.5 wt% of lithium carbonate and lithium hydroxide; 1 wt% - 9 wt% of lithium carbonate and lithium hydroxide; 3 wt% - 7 wt% of lithium carbonate and lithium hydroxide; or 4 wt% - 6 wt% of lithium carbonate and lithium hydroxide. In various cases, an exemplary positive electrode material may contain not more than 10 wt% of lithium carbonate and lithium hydroxide; not more than 9 wt% of lithium carbonate and lithium hydroxide; not more than 7 wt% of lithium carbonate and lithium hydroxide; not more than 6 wt% of lithium carbonate and lithium hydroxide; not more than 5 wt% of lithium carbonate and lithium hydroxide; not more than 4 wt% of lithium carbonate and lithium hydroxide; not more than 3 wt% of lithium carbonate and lithium hydroxide; not more than 2 wt% of lithium carbonate and lithium hydroxide; not more than 1 wt% of lithium carbonate and lithium hydroxide; or not more than 0.5 wt% of lithium carbonate and lithium hydroxide. In various cases, an exemplary positive electrode material may contain not less than 0.1 wt% of lithium carbonate and lithium hydroxide; not less than 0.5 wt% of lithium carbonate and lithium hydroxide; not less than 1 wt% of lithium carbonate and lithium hydroxide; not less than 2 wt% of lithium carbonate and lithium hydroxide; not less than 3 wt% of lithium carbonate and lithium hydroxide; not less than 4 wt% of lithium carbonate and lithium hydroxide; not less than 5 wt% of lithium carbonate and lithium hydroxide; not less than 6 wt% of lithium carbonate and lithium hydroxide; not less than 7 wt% of lithium carbonate and lithium hydroxide; not less than 8 wt% of lithium carbonate and lithium hydroxide; or not less than 9 wt% of lithium carbonate and lithium hydroxide.

In an exemplary positive electrode material, the molar ratio of lithium carbonate to lithium hydroxide is 4 : 1 - 14 : 1, preferably 5 : 1 - 12 : 1, more preferably 8 : 1. In various cases, the molar ratio of lithium carbonate to lithium hydroxide is 4 : 1 - 14 : 1, 5 : 1 - 13 : 1, 5 : 1 - 12 : 1, 5 : 1 - 11 : 1, 6 : 1 - 10 : 1, 7 : 1 - 9 : 1, or 8 : 1. In various cases, the molar ratio of lithium carbonate to lithium hydroxide is not more than 14 : 1, not more than 13 : 1, not more than 12 : 1, not more than 11 : 1, not more than 10 : 1, not more than 9 : 1, or not more than 8 : 1. In various cases, the molar ratio of lithium carbonate to lithium hydroxide is not less than 4:1, not less than 5 : 1, not less than 6 : 1, not less than 7 : 1, or not less than 8 : 1.

An exemplary positive electrode material preparation method comprises the following steps:
step 1, obtaining the content of lithium carbonate and lithium hydroxide in a positive electrode active material;
step 2, adding lithium carbonate and/or lithium hydroxide according to the content from step 1.

Through the two steps above, a result is finally obtained whereby the total amount of lithium carbonate and lithium hydroxide in the positive electrode material, and the proportions of lithium carbonate and lithium hydroxide, meet the abovementioned requirements, i.e. the molar ratio of lithium carbonate to lithium hydroxide in the positive electrode material is 4 : 1 - 14 : 1, preferably 5 : 1 - 12 : 1, and more preferably 8 : 1; and the content of lithium carbonate and lithium hydroxide in the positive electrode material is 0.1 wt% - 10 wt%, preferably 1 wt% - 7 wt%, and more preferably 4 wt%.

An exemplary positive electrode may be prepared by applying a positive electrode slurry containing a positive electrode material (which may contain a positive electrode active material, a binder, a conductive agent and an additive) to a positive electrode current collector, and drying the slurry. The positive electrode material may be further compacted onto the current collector using a pressing method known to a person skilled in the art. An exemplary positive electrode slurry may be prepared by combining positive electrode material components (a positive electrode active material, a binder, a conductive agent and an additive) and adding a suitable solvent (e.g. N-methylpyrrolidone (NMP)).

### II. Negative electrode

An exemplary negative electrode generally may contain a negative electrode material and a negative electrode current collector. An exemplary negative electrode material may contain a negative electrode active material, a binder and a conductive agent, and another additive. The negative electrode material is formed on a surface of the negative electrode current collector. The negative electrode material may be formed on only one side of the negative electrode current collector, or on front and back sides of the negative electrode current collector. The negative electrode material may for example have a thickness of 10 µm to 200 µm. There are no particular restrictions on the negative electrode active material, which may contain carbon, such as natural or artificial graphite. In various cases, an exemplary negative electrode active material may be a carbon composite material, such as a silicon-carbon composite material ("Si/carbon"). An exemplary negative electrode current collector is copper foil.

An exemplary negative electrode material may contain 90 wt% - 99 wt% of negative electrode active material. In various cases, an exemplary negative electrode may contain 91 wt% - 99 wt% of negative electrode active material; 92 wt% - 98 wt% of negative electrode active material; 93 wt% - 97 wt% of negative electrode active material; or 94 wt% - 96 wt% of negative electrode active material. In various cases, an exemplary negative electrode material may contain not more than 99 wt% of negative electrode active material; not more than 98 wt% of negative electrode active material; not more than 97 wt% of negative electrode active material; not more than 96 wt% of negative electrode active material; not more than 95 wt% of negative electrode active material; not more than 94 wt% of negative electrode active material; not more than 93 wt% of negative electrode active material; not more than 92 wt% of negative electrode active material; not more than 91 wt% of negative electrode active material; or not more than 90 wt% of negative electrode active material. In various cases, an exemplary negative electrode material may contain not less than 90 wt% of negative electrode active material; not less than 91 wt% of negative electrode active material; not less than 92 wt% of negative electrode active material; not less than 93 wt% of negative electrode active material; not less than 94 wt% of negative electrode active material; not less than 95 wt% of negative electrode active material; not less than 96 wt% of negative electrode active material; not less than 97 wt% of negative electrode active material; not less than 98 wt% of negative electrode active material; or not less than 99 wt% of negative electrode active material. An exemplary negative electrode material may also be substantially formed of negative electrode active material alone.

An exemplary negative electrode may be prepared by applying a negative electrode slurry containing negative electrode material components (which may contain a negative electrode active material, a binder and a conductive agent) to a current collector, and drying the slurry on the current collector. The negative electrode material may be further compacted onto the current collector using a pressing method known to a person skilled in the art. An exemplary negative electrode slurry may be prepared by combining negative electrode material components (a negative electrode active material, a binder and a conductive agent) and adding a suitable solvent (e.g. NMP).

In addition, a binder and/or a conductive agent may optionally be contained in the negative electrode material, and may be the same (or substantially the same) as those described in relation to the positive electrode material, so are not described again in the present invention.

### III. Separator

There are no particular restrictions on the separator of the lithium-ion battery of the present invention. An exemplary separator is a separator prepared from a polymer such as polypropylene (PP) or polyethylene (PE).

### IV. Electrolyte

In the lithium-ion battery of the present invention, there are no particular restrictions on the electrolyte. For example, it is a non-aqueous electrolyte; an exemplary non-aqueous electrolyte comprises one or more lithium (Li) salts and a non-aqueous solvent. For example, it is an organic electrolyte, prepared by dissolving a lithium salt in an organic solvent. The lithium salt may be any lithium salt commonly used in the art. An exemplary lithium salt is LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiCl, LiI, LiN(CₓF₂ₓ+1SO₂)(C_{y}F_{2y}+1SO₂) (where x and y are natural numbers) or any mixture thereof. The organic solvent may be any suitable material that can be used as an organic solvent. An exemplary organic solvent is ethylene carbonate, ethyl vinyl carbonate, propylene carbonate, ethylene carbonate, fluoroethylene carbonate, butylene carbonate, dimethyl carbonate, diethyl carbonate, ethyl methyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a combination thereof.

In addition to the above-mentioned organic electrolyte, another exemplary electrolyte may be an organic solid electrolyte, an inorganic solid electrolyte, etc. Examples of the organic solid electrolyte include polyethylene derivatives, polyethylene oxide derivatives, polypropylene oxide derivatives, phosphate polymers, polyester sulfides, polyvinyl alcohol, PVDF, and polymers comprising ion dissociation groups. Examples of the inorganic solid electrolyte are nitride solid electrolytes, oxynitride solid electrolytes and sulfide solid electrolytes. Examples of the inorganic solid electrolyte are Li₃N, LiI, Li₅NI₂, Li₃N-LiI-LiOH, Li₂SiS₃, Li₄SiO₄, Li₄SiO₄-LiI-LiOH and Li₃PO₄-Li₂S-SiS₂.

An exemplary lithium-ion battery may be made by using a method known to a person skilled in the art.

### Particular examples

The examples below describe some embodiments of the present invention; they provide an illustration of the present invention, but the present invention is not limited to this.

### Example 1: Preparation of positive electrodes with different molar ratios of lithium carbonate to lithium hydroxide

PVDF and NMP are mixed to make a glue. The following are added to a stirring kettle: 93 wt% LiNi_{0.8}Co_{0.1}Mn_{0.1}O₂, 2% conductive agent (conductive carbon black), and a corresponding content of additive (lithium carbonate and lithium hydroxide); the abovementioned glue is then added, and stirring is performed until the mixture is uniform, to obtain a positive electrode slurry. The sum of mass percentages of the materials in the slurry is 1.

By controlling the amount of additive added and the proportions of lithium carbonate and lithium hydroxide in the additive, positive electrode material slurries containing different total amounts of lithium carbonate and lithium hydroxide, and different proportions of lithium carbonate and lithium hydroxide, are finally obtained. The positive electrode slurry is applied to a positive electrode current collector aluminum film and drying is performed to obtain a positive electrode material, in which the total amount of lithium carbonate and lithium hydroxide is 4 wt%. The positive electrode material is further compacted onto the positive electrode current collector to obtain a positive electrode plate.

It was found through experiment that when n(lithium carbonate) : n(lithium hydroxide) in the positive electrode material is 1 : 1 or 2 : 1, gelation readily occurs during homogenization, and the positive electrode material cannot be applied to the positive electrode current collector effectively. Thus, in the present invention, tests were performed on positive electrode plates with the n(lithium carbonate) : n(lithium hydroxide) ranges in Table 1.

**Table 1: n(lithium carbonate) : n(lithium hydroxide) in positive electrode material**

| Group | A | B | C | D | E |
|---|---|---|---|---|---|
| n(lithium carbonate) : n(lithium hydroxide) | 15:1 | 12:1 | 8:1 | 5:1 | 3:1 |

### Example 2: Overcharge testing

The positive electrode plates in the five groups A, B, C, D and E prepared in Example 1 are subjected to overcharge testing. Lithium-ion batteries may be made by using a method known to a person skilled in the art, wherein the negative electrode active material is a silicon-carbon composite material, the negative electrode current collector is copper film, the electrolyte is an organic electrolyte, and the separator is a polypropylene separator.

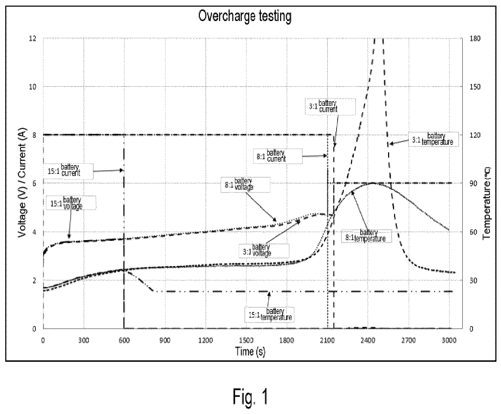

Test conditions: the battery is discharged to 2.5 V, charged to 6 V with constant current at 2C, then charged at constant voltage for 15 minutes before stopping. The experimental results are shown in Table 2 and Fig. 1 (only n(lithium carbonate) : n(lithium hydroxide) ratios of 3 : 1, 8 : 1 and 15 : 1 are shown in the figure).

**Table 2: Overcharge testing results**

| **Group** | **CID activation time (s)** | **CID activation temperature (°C)** | **Maximum battery temperature (°C)** | **Smoke** | **Explosion** | **Combustion** |
|---|---|---|---|---|---|---|
| A | 597 | 37.2 | 37.2 | No | No | No |
| B | 2035 | 63.0 | 95.5 | No | No | No |
| C | 2100 | 73.5 | 90.0 | No | No | No |
| D | 2194 | 81.7 | 139.0 | No | No | No |
| E | 2184 | 79.3 | 259.9 | Yes | Yes | Yes |

It can be seen from Table 2 and Fig. 1 that:
Group A: the CID activation temperature is 37.2°C; the battery cannot be used normally.
Group B: the CID activation temperature is 63.0°C, good overcharging and CID activation performance is exhibited, and the maximum battery temperature is 95.5°C; the battery can be used normally.
Group C: the CID activation temperature is 73.5°C, good overcharging and CID activation performance is exhibited, and the maximum battery temperature is 90°C, which is lower than groups B and D; the battery can be used normally.
Group D: the CID activation temperature is 81.7°C, good overcharging and CID activation performance is exhibited, and the maximum battery temperature is 139°C, which is higher than group C but lower than group E.
Group E: the CID activation temperature is 73.9°C, battery overcharging performance is poor, the maximum battery temperature is 259.9°C, and the battery explodes; the battery cannot be used normally.

### Example 3: hot box testing

The positive electrode plates in the five groups A, B, C, D and E prepared in Example 1 are subjected to hot box testing. Lithium-ion batteries may be made by using a method known to a person skilled in the art, wherein the negative electrode active material is a silicon-carbon composite material, the negative electrode current collector is copper film, the electrolyte is an organic electrolyte, and the separator is a polypropylene separator.

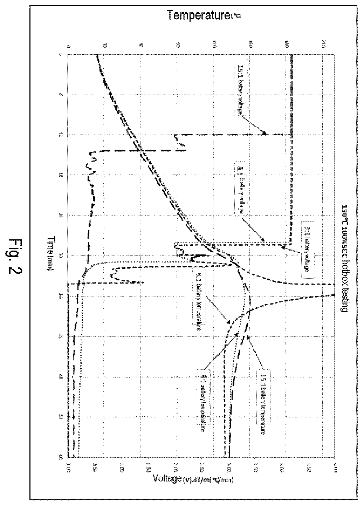

Test conditions: battery state: 100% SOC, the battery is placed in a thermostatic box, the temperature is raised to 130°C at a rate of 5°C/min and then held constant for 30 min. The experimental results are shown in Table 3 and Fig. 2 (only n(lithium carbonate) : n(lithium hydroxide) ratios of 3 : 1, 8 : 1 and 15 : 1 are shown in the figure).

**Table 3: hot box test results**

| **Group** | **Status** | **Maximum temperature (°C)** | **CID activation temperature (°C)** | **Phenomenon** | | | | |
|---|---|---|---|---|---|---|---|---|
| | | | | **Vent valve** | **Leakage** | **Smoke** | **Explosion** | **Combustion** |
| A | Pass | 130.0 | 47.5 | Opens | Yes | No | No | No |
| B | Pass | 147.0 | 111.2 | Opens | Yes | No | No | No |
| C | Pass | 142.0 | 115.2 | Opens | Yes | No | No | No |
| D | Pass | 150.9 | 117.7 | Opens | Yes | No | No | No |
| E | Fail | 579.3 | 119.4 | Opens | Yes | Yes | Yes | Yes |

It can be seen from Table 3 and Fig. 2 that:
Group A: the CID activation temperature is 47.5°C; the battery cannot be used normally.
Group B: the CID activation temperature is 111.2°C, good high-temperature safety performance is exhibited, and the maximum battery temperature is 147.0°C; the battery can be used normally, and safety performance is good.
Group C: the CID activation temperature is 115.2°C, good high-temperature safety performance is exhibited, and the maximum battery temperature is 142°C, which is lower than groups B and D; the battery can be used normally, and safety performance is good.
Group D: the CID activation temperature is 117.7°C, good high-temperature safety performance is exhibited, and the maximum temperature is 150.9°C, which is higher than group C and lower than group E; the battery cannot be used normally, and safety performance is good.
Group E: the CID activation temperature is 119.4°C, high-temperature safety performance, the maximum battery temperature is 579.3°C, and the battery bursts and catches fire; safety performance is poor.

The above description of various embodiments of the present invention is provided to a person skilled in the art for descriptive purposes. The present invention is not intended to be exclusive or limited to a single disclosed embodiment. Based on the above, a person skilled in the field of the above teaching will understand various substitutes for and variants of the present invention. Therefore, although some alternative embodiments have been specifically described, a person skilled in the art will understand, or develop with relative ease, other embodiments. The present invention is intended to include all substitutes for, alterations to, and variants of the present invention described herein, as well as other embodiments falling within the spirit and scope of the present invention described above.

## Claims

1. Lithium-ion battery positive electrode material, **characterized by** containing lithium carbonate and lithium hydroxide, the molar ratio of the lithium carbonate to the lithium hydroxide being 4 : 1 - 14 : 1, preferably 5 : 1 - 12 : 1, and more preferably 8 : 1.

2. Lithium-ion battery positive electrode material according to Claim 1, **characterized in that** the content of the lithium carbonate and lithium hydroxide is 0.1 wt% - 10 wt%, preferably 1 wt% - 7 wt%, and more preferably 4 wt%.

3. Lithium-ion battery positive electrode material according to Claim 1, **characterized by** containing 90 wt% - 99 wt%, preferably 93 wt%, of a positive electrode active material.

4. Lithium-ion battery positive electrode material according to Claim 3, **characterized in that** the positive electrode active material is selected from at least one of lithium nickel cobalt manganese oxide, lithium manganese oxide, lithium cobalt oxide, lithium nickel oxide, lithium nickel cobalt aluminum oxide and lithium iron phosphate.

5. Lithium-ion battery positive electrode material according to Claim 3, **characterized in that** the positive electrode active material is LiNi_{0.8}Co_{0.1}Mn_{0.1}O₂.

6. Lithium-ion battery positive electrode material according to Claim 1, **characterized by** further containing 0.1 wt% - 10 wt% of a binder.

7. Lithium-ion battery positive electrode material according to Claim 6, **characterized in that** the binder is selected from at least one of polyvinylidene fluoride, carboxymethyl cellulose and styrene-butadiene rubber.

8. Lithium-ion battery positive electrode material according to Claim 1, **characterized by** further containing 0.1 wt% - 10 wt%, preferably 2 wt%, of a conductive agent.

9. Lithium-ion battery positive electrode material according to Claim 8, **characterized in that** the conductive agent is selected from at least one of conductive carbon black, superconductive carbon black, carbon nanotubes, vapor-grown carbon fibers and graphite conductive agents.

10. Lithium-ion battery, **characterized by** comprising:
a positive electrode, containing a positive electrode current collector and the lithium-ion battery positive electrode material according to any one of Claims 1 - 9;
a negative electrode, containing a negative electrode current collector and a negative electrode material;
a separator; and
an electrolyte.

11. Method for preparing the lithium-ion battery positive electrode material according to any one of Claims 1-9, **characterized by** comprising the following steps:
step 1, obtaining the content of lithium carbonate and lithium hydroxide in a positive electrode active material;
step 2, adding lithium carbonate and/or lithium hydroxide according to the content from step 1.

12. Preparation method according to Claim 11, **characterized in that** lithium carbonate and/or lithium hydroxide is/are added so that the molar ratio of lithium carbonate to lithium hydroxide in the positive electrode material is 4 : 1 - 14 : 1, preferably 5 : 1 - 12 : 1, and more preferably 8 : 1.

13. Preparation method according to Claim 11, **characterized in that** lithium carbonate and/or lithium hydroxide is/are added so that the content of lithium carbonate and lithium hydroxide in the positive electrode material is 0.1 wt% - 10 wt%, preferably 1 wt% - 7 wt%, and more preferably 4 wt%.
